# EUROPEAN PATENT APPLICATION

(11) **EP 2 853 920 A1**
(43) Date of publication of application: **01.04.2015**
(21) Application number: 14472005.9
(22) Date of filing: 29.09.2014
(51) Int. Cl.: G01S 17/58, G01P 3/36, G01S 17/02

(54) **Method and system for contactless measurement of traversed distance**

(30) Priority: 30.09.2013 BG 11158413
(71) Applicant: Milev, Ivo Georgiev, 1113 Sofia (BG)
(72) Inventor: Milev, Ivo Georgiev, 1113 Sofia (BG)
(74) Representative: Manev, Kostadin Chanev

(57) **Abstract**

The invention relates to a method and a system for contactless measurement of traversed distance, which method and system shall find application in the construction and repairs of roads and railways.

The method of contactless measurement of traversed distance includes the following operations:
- emission of beams by laser-optical contactless sensors (1), placed onto a mobile platform (8), to the measured object;
- on the basis of the Doppler effect, the signal reflected by the object is processed into analog electrical pulses proportional to the traversed distance;
- the analog electrical pulses from the sensors (1) go into an analog-to-digital converter (3), get converted into a digital signal, which is sent to the computing unit of the interface system (5), where signals from the inertial computing system (2) and synchronizing signals from the synchronizing devices (4) are received too;
- the received signals are processed by the computing unit of the interface system (5) and
- the signal from the computing unit of the interface system (5) is sent to the central computing unit (6), which calculates the location and the traversed distance from a predetermined starting point and sends the final data to an end user.

## Description

### TECHNICAL FIELD

The invention relates to a method and a system for contactless measurement of traversed distance, which method and system shall find application in the construction and maintenance of road and railway infrastructure, especially in the construction and repairs of roads and railways.

### BACKGROUND OF THE INVENTION

There have been known a method and a system for measurement of traversed distance, which use contact sensors whose principle of operation is based on a direct physical contact with the studied object. In this case the contact sensors are attached to a rotation axis of a driving wheel. The revolutions performed by the axis are transmitted via physical friction to a mechanical rotating device, which registers their number, after which, in accordance with a predetermined algorithm, the traversed distance and/or the speed is measured. In this case the measurement is mandatorily done on the basis of the interaction between the contact sensor and a rotation element of a mobile platform.

A significant problem in the use of contact sensors are the occurrences of skidding of the driving wheel which cannot be registered by the contact sensor, in so far as in case of skidding the wheel itself is at rest. This is a prerequisite for accumulation of a significant error that may discredit the measurements in absolute terms (such as distance) and in relative terms (by discrediting the data collected by other sensors). This problem is observed mainly in the measurement of train distance where the skidding of the driving wheel is a common occurrence.

In the contact measurement of distance traversed by an automobile the sensor is normally attached onto the axis of one of the rear wheels. The alternating pressure in the tyre, which depends on the temperature and on other factors, makes practically impossible the accurate determining of the diameter of the wheel that is in contact with the road surface. This leads to inaccurate reading and cumulative error, which at a long distance may also discredit the measurement.

The use of contact sensors leads also to a number of other shortcomings constituted mostly in a relatively short life of the sensors due to the peculiar friction when they are used and other physical influences. Another shortcoming is the difficulty in eliminating the effect of external factors on the measurement, such as heat, humidity, air pressure, etc., which makes difficult the creating of an accurate algorithm to interpret precisely and accurately all such deviations from the initial parameters.

There have been known a method and a system for contactless magnetic measurement of traversed distance, which method and system use magnetic sensors detecting rotational and linear movement, without need of a measuring contact surface, on the basis of electromagnetic pulses generated as a result of magnetic interference between the sensor and the measuring object, most often a disc. The intersection of the two magnetic fields (the one of the sensor and the one of the ferromagnetic disc) leads to the creating of electrical pulses that are processed with special algorithms and give source data about speed and/or distance. This type of sensors manage to overcome the significant shortcoming of the contact technology - namely the problems related to the increased wearing of the contact sensors, external influences and pollutions, but nevertheless they have their own difficultly solvable problems connected with the applicable methods of measurement.

Shortcomings of the methods and systems based on magnetic sensors are:
- need of ferromagnetic measuring object/disc;
- considerably louder background noise that is created by external magnetic fields that cannot be registered accurately by the calculating algorithm;
- a significant problem is the precise fixing of the sensor with reference to the object to be studied (the technical play), which makes it vulnerable to vibrations;
- a shortcoming of this type of sensors are also the processes of magnetic hysteresis (magnetization of the ferromagnetic materials), which may lead to an additional error in the measurements;
- the most significant shortcoming of this type of sensors is the need of presence of an electrically conductive object to be studied, in so far as their principle of operation is related to this effect, which makes them practically non-usable in all linear objects with inert electrical conductivity;
- another significant shortcoming of the existing contactless methods is the impossibility for them to be applied to a mobile system;
- the problem with the skidding of the wheel onto which the the magnetic disc is attached, characteristic of the contact methods as well, remains.

There have been known a method and a system for contactless magnetic measurement of traversed distance, which method and system use radars using radio waves emitted by a generator of electromagnetic radiation. They are characterized with the emission of a directed beam of radio waves. When they reach the studied object, they are reflected by it back to the radar. The position of the measured object can be determined by measurement of the time for which the signal has come back. This is how the remoteness is determined and by means of the Doppler effect can also be determined the speed of movement of the object, and hence - the distance traversed.

Although they solve some of the significant problems typical for the contact measurements of distance, this type of contactless measurements have their own limitations. A major shortcoming they have is the insufficiently high accuracy of measurement, in view of the typical scattering of the emitted radio waves. Another significant shortcoming is related to the mobile positioning of the radar (i.e. the movement of the sensor with reference to the object that is being measured), which requires informativeness about the exact speed of movement of the mobile platform so that differential reading of the returned signal can be done. This leads to increasing of the error and lowers considerably the accuracy of the measurement. A shortcoming of this type of sensors, radar-based sensors, is also their vulnerability to influences from various reflective surfaces (metal plates, boards) and atmospheric conditions (difference in the measurement in rainy and dry weather), which significantly limits their application in high-precision measurement of traversed distance.

There have been known also methods and systems for measurement of traversed distance that use a global positioning navigation system. They, however, have a wide margin of error, because of which they are used only for measurement of large distances. The main shortcoming of the geopositioning navigation systems is the lack of enough precision, their inapplicability in the measuring of a route passing through tunnels and the errors resulting from loss of satellite signal.

### SUMMARY OF THE INVENTION

The invention is aimed at creating an autonomous method and system for contactless measurement of traversed distance, which method and system shall at the same time ensure high precision of the measurement.

The method of contactless measurement of traversed distance includes the following operations:
- initially, laser-optical contactless sensors placed on a mobile platform emit laser beams to the measured object;
- on the basis of the Doppler effect, the signals reflected by the object are processed into analog electrical pulses proportional to the traversed distance, after which
- the analog electrical pulses from the laser-optical sensors go into an analog-to-digital converter, where the electrical pulses from the laser-optical sensors are converted into a digital signal;
- the digital signal from the analog-to-digital converter is sent to the computing unit of the interface system and
- at the same time the signals from the three accelerometers of a simultaneously working inertial system go into the input of the computing unit of the interface system along the orthogonal axes (x, y and z) and
- simultaneously with the above operations, synchronizing signals from synchronizing devices are sent to the computing unit of the interface system;
- the signals thus received (from the laser-optical sensors, from the inertial-computing system and from the devices for generation of synchronizing signals) are processed by the computing unit of the interface system;
- the signal from the computing unit of the interface system is sent to the central computing unit working with a specialized software that calculates with high accuracy the location and the traversed distance from a predetermined starting point and sends the final data about the measured object to an end user.

For the purpose of verification and correction of the coordinates of the measured object and/or of individual points of it, there has been provided a global positioning navigation system, which sends additional synchronizing signals and location to the computing unit of the interface system.

The system for contactless measurement of traversed distance includes sensors of contactless laser-optical type, which are connected to a central computing unit by means of successively connected analog-to-digital converter and computing unit of an interface system. Directly to the computing unit of the interface system are connected an inertial computing system and devices for generation of synchronizing signals. The described system for contactless measurement of traversed distance is fixed on a mobile platform.

In one embodiment of the system, the computing unit of the interface system has a global positioning navigation system connected to it for further verification and correction of the coordinates of the measured object and/or of individual points of it.

The advantages of the invention are manifested in several directions:
The proposed method allows precise measurement, with significantly increased accuracy, of the traversed distance and it is completely autonomous and practically provides accurate measurements without the need of use even of satellite navigation systems with regard to ground linear objects of any kind.
The system for measurement of traversed distance adds functionality to the laser-optical sensors and gives an opportunity for their principle of operation to be used in a new, unfamiliar technological way which solves technical problems unsolved until now, with highly increased precision at that.
Besides, the proposed method allows for achievement of an autonomous, with high precision, level of interpolation of the received data, without the constant use of a global positioning navigation system.
The system allows precise determination of the state when the mobile platform is at rest, which the existing systems are unable to do with the necessary precision, and this decreases the error rate in the measurements and capturing of the data about the traversed distance.
The system enables registration also of back movement of the platform (the so called negative distance), which the existing systems generally cannot register and this reduces the error rate in the measurements and capturing of the data.
The proposed invention overcomes the shortcomings of the existing contact technologies, because it excludes the influence of accidental factors characteristic of the contact measurement - inaccurate source data, constructive plays, lack of information about the exact circumference of the contact surface and other complexly determinable parameters which appear as a shortcoming of the existing technologies.
In comparison to the mentioned other contactless methods of measurement, the proposed method ensures better resolution, more universal application (practically in all types of roads and linear objects), absence of distortions of the signal and wrong measurements caused by external electromagnetic influences, and significantly smaller error rate.

### DESCRIPTION OF THE ACCOMPANYING FIGURES

The present invention is illustrated with the accompanying figures where:
Figure 1 - shows a schematic diagram of the system for contactless measurement of traversed distance and/or linear objects;
Figure 2 - shows a schematic diagram of the system for contactless measurement of traversed distance and/or linear objects, which system is provided with a global positioning navigation system (GPS);
Figure 3 - a system for contactless measurement of traversed distance, installed on a mobile platform, and;
Figure 4 - a system for contactless measurement of traversed distance, installed on a mobile platform and provided with a global positioning navigation system.

### EMBODIMENTS OF THE INVENTION

The developed method for measurement of traversed distance is based on the laser-surface velocimetry, which is based on the principle of the differential laser-Doppler effect where highly sensitive electronics measures the laser beam reflected by a moving object. The Doppler distortion of the laser beam is processed with a special algorithm in order to provide source data about the travel speed of the object.

The proposed method uses the principle of operation of the laser-optical sensors, which sensors, through a system of additional devices and a specialized software, can be used on a mobile platform for the purposes of measuring of distance and length of linear objects.

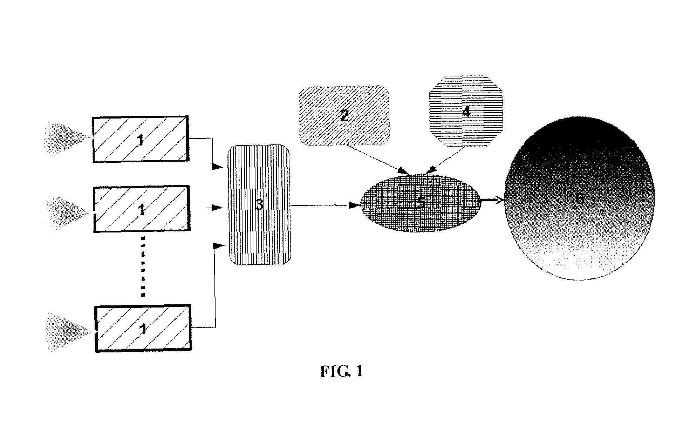

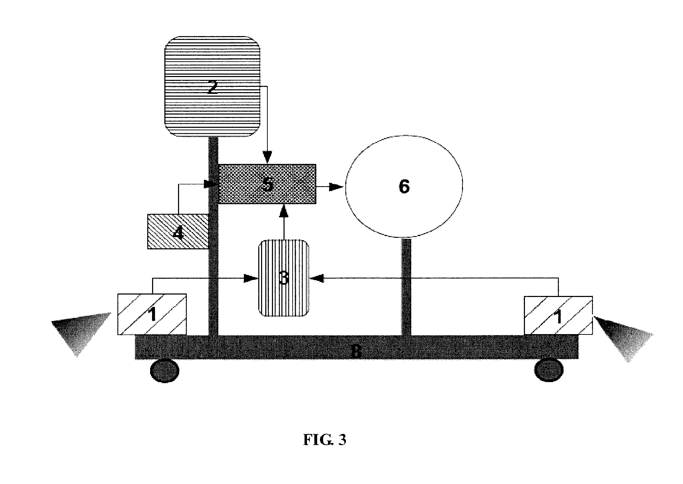

The method for contactless measurement of traversed distance is clarified with the accompanying figures 1 and 3 and includes the following operations:
- at first the laser-optical sensors 1 are placed on a mobile platform 8 in a specific way, which allows for appropriate radiation of the measured object. The existing hardware control of the laser-optical sensors 1 is additionally processed with a specific command line for achieving of an optimal integration of the signal sent by the sensors 1 in the subsequent processing by the specialized software. The power supply of the sensors 1 is with voltage allowing their mobile use;
- after the mobile platform 8 is set into motion, the laser-optical sensors 1 emit laser beams to the measured object and the relevant surroundings;
- the signals reflected by the object are processed into analog electrical pulses by the laser-optical sensors 1, proportional to the traversed distance, after which

- the analog electrical pulses from the laser-optical sensors 1 go into an analog-to-digital converter 3 where the electrical pulses from the laser-optical sensors 1 are converted into a digital signal;
- the processed signal from the analog-to-digital converter 3 is sent to the computing unit of the interface system 5 and
- at the same time signals from the three accelerometers of the inertial computing system 2 go into the input of the computing unit of the interface system 5 along the orthogonal axes (x, y and z) and
- simultaneously with the above processes, the computing unit of the interface system 5 receives synchronizing signals from the synchronizing devices 4;
- the signals received from the laser-optical sensors 1, from the inertial-computing system 2 and from the devices for generation of synchronizing signals 4 are processed by the computing unit of the interface system 5;
- the signal from the computing unit of the interface system 5 is sent to the central computing unit 6, which calculates the location and the traversed distance from a predetermined starting point;
- the final data about the measured object from the central computing unit 6 are sent to an end user in the form of "3D" digital information about the measured object.

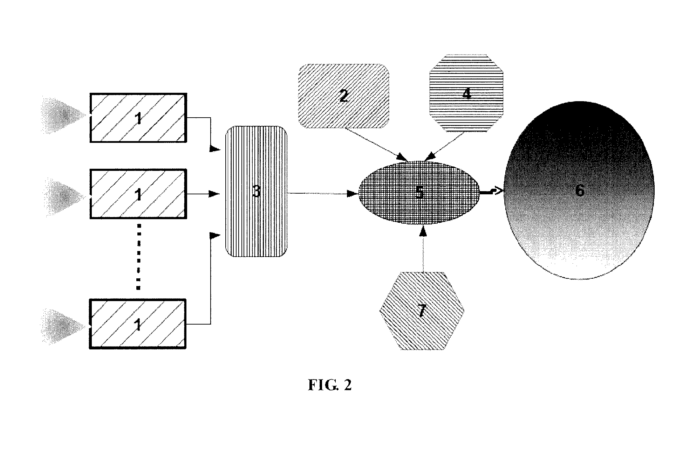

According to the present invention, there is a possibility also of a method according to which additional synchronizing signals are sent by a global positioning navigation system 7 to the computing unit of the interface system 5 for the purposes of verifying the coordinates of the measured object and/or individual points of it - fig. 2.

The system for measurement of traversed distance includes a mobile platform 8, on which there are more than one laser-optical sensors 1 for measurement of distance and length of linear objects - fig. 3. The laser-optical sensors 1 are connected unilaterally with an analog-to-digital converter 3. The analog-to-digital converter 3 is connected to a computing unit of the interface system 5. Directly connected to the same unit of the interface system 5 there are an inertial-computing system 2 with three accelerometers tracking the position of the platform 8 on the road and the device for generation of synchronizing signal 4. The computing unit of the interface system 5 is connected to the central computing unit 6.

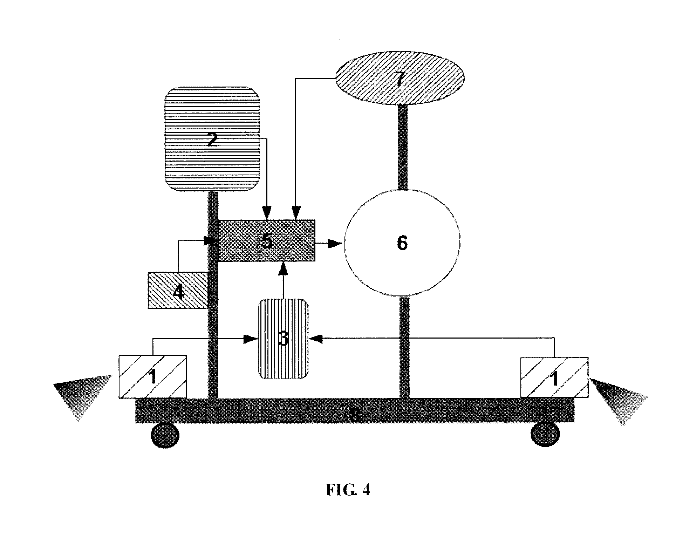

Figure 4 shows a schematic diagram of an embodiment of the system provided with a global positioning navigation system 7, which is connected with the computing unit of the interface system 5. In this case the global positioning navigation system 7 gives additional advantages to the system, which are constituted in the possibility for the system to periodically verify and correct the coordinates of the measured object as a whole and/or the coordinates of individual points of it.

The power supply of the system for measurement of traversed distance (not shown on the accompanying figures 1 and 3) too is fixed on the mobile platform 8.

## Claims

1. **A method for contactless measurement of traversed distance** wherein sensors send a signal to a computing unit, **characterized in that:**
- initially, the sensors, which are laser-optical contacless sensors (1) placed on a mobile platform (8), emit laser beams to the measured object;
- the signals reflected by the object are processed into analog electrical pulses proportional to the traversed distance, after which
- the analog electrical pulses from the laser-optical sensors (1) go into an analog-to-digital converter (3);
- the electrical pulses from the laser-optical sensors (1) are transformed by the analog-to-digital converter (3) into a digital signal;
- the processed signal from the analog-to-digital converter (3) is sent to the computing unit of the interface system (5) and
- at the same time the signals from the three accelerometers of the inertial computing system (2) go into the input of the computing unit of the interface system (5) along the orthogonal axes (x, y and z) and
- simultaneously with the above processes, the computing unit of the interface system (5) receives synchronizing signals from the synchronizing devices (4);
- the signals received from the laser-optical sensors (1), from the inertial-computing system (2) and from the devices for generation of synchronizing signal (4) are processed by the computing unit of the interface system (5);
- the signal from the computing unit of the interface system (5) is sent to the central computing unit (6), which calculates the location and the traversed distance from a predetermined starting point;
- the final data about the measured object from the central computing unit (6) are sent to an end user.

2. **A method for contactless measurement of traversed distance according to claim 1, characterized in that** additional synchronizing signals are sent by a global positioning navigation system (7) to the computing unit of the interface system (5) for the purposes of verifying and correcting of the coordinates of the measured object and/or of individual points of it.

3. **A system for contactless measurement of traversed distance according to claim 1,** containing sensors connected to a computing unit, **characterized in that** the sensors (1) are of contactless laser-optical type and are connected to a central computing unit (6) through successively connected analog-to-digital converter (3) and computing unit of an interface system (5), the computing unit of the interface system (5) having directly connected to it an inertial computing system (2) and devices for generation of synchronizing signal (4), and the described system for contactless measurement of traversed distance is fixed onto a mobile platform (8).

4. **A system according to claim 3, characterized in that** a global positioning navigation system (7) is connected to the computing unit of the interface system (5).
